# EUROPEAN PATENT APPLICATION

(11) **EP 1 094 615 A2**
(43) Date of publication of application: **25.04.2001**
(21) Application number: 00402775.1
(22) Date of filing: 09.10.2000
(51) Int. Cl.: H04B 1/707, H04B 7/26

(54) **Method and transmitter unit for synchronisation in a CDMA system**

(30) Priority: 20.10.1999 ES 9902306
(71) Applicant: ALCATEL, 75008 Paris (FR)
(72) Inventor: Gonzalez Ahijado, Angel, 28916 Leganes (Madrid) (ES); Hector Lloret, Javier, 28007 Madrid (ES); Nunez Leon de Santos, Gregorio, 45005 Toledo (ES); Perez Abadia, Mariano, 28006 Madrid (ES); Vallejo Cabrejas, Gema, 28229 Villanueva del Pardillo (Madrid) (ES)
(74) Representative: Lamoureux, Bernard

(57) **Abstract**

Method of synchronisation in a CDMA radio access system comprising one or more fixed units and various remote units. Within the coverage cell or cells, the fixed units communicate with the remote units by making use of a CDMA or TDM/CDMA radio frame. To facilitate synchronisation, the method is characterised by the division of the time slot(s) T carrying information into two sub-fields, one S for transmitting a synchronism pattern, and the other V/D for transmitting the signal with user data, encoded voice or signalling. The simultaneous CDMA channels transmitted by the fixed unit or units, use different, allocated spreading codes PN(i, j) during the voice or data sub-field, whereas in the synchronisation sub-fields they use a common code C(S)i. In the uplink direction, from remote units to fixed unit, each remote unit employs a unique spreading code that is common for the synchronisation sub-fields of the various synchronous CDMA channels transmitted in the same time slot.

## Description

### OBJECT OF THE INVENTION

The present invention relates to a method for CDMA synchronisation by using a code common to a plurality of channels transmitted simultaneously and to a transmitter unit for carrying out said method, which serve to improve the capture of time slot and frame synchronisation in a multiple access system based on CDMA technology. A multiple access system comprises a set of fixed units, with a coverage cell associated with each one of these. Within each cell, a series of remote units is to be found that employ time division access methods (TDM/TDMA), in combination with the code division multiple access (CDMA) method.

The TDM/TDMA system is a method of special (but not exclusive) application in the multiple access systems based on radio, since it permits the allocation of a time slot, within those which constitute a frame, to each of the communications, allocation that is carried out in a dynamic manner as a function of traffic requirements, indicated by the signalling messages sent and received by the remote units.

The code division multiple access (CDMA) method is a method used in digital cellular systems and, by extension, also in the multiple access systems, which resolves the allocation and simultaneous use of channels by the remote units with the use of high bit rate codes of great length, which are multiplied by the binary train resulting from the encoding of the signal that makes up each communication. A pulse train is thereby obtained having a bit rate higher than that resulting from pure encoding, which when modulated produces energy in a much broader band than that resulting from the possible modulation of the original train, but with much lower amplitude (spread spectrum). All the signals resulting from the multiple access are mixed in the air. The orthogonality or pseudo-orthogonality of the codes guarantees the demultiplexing of each communication at the receiving end, by again multiplying the received signal by the same code as was used at the sending end.

Both methods can be combined, giving rise to a CDMA/TDM-TDMA system, multiplying the use of each TDM/TDMA channel by as many CDMA codes as are available in the system. Both in a pure CDMA system and in a mixed CDMA/TDMA system, the acquisition of time slot, as well as frame synchronisation is necessary at the receiving end.

### STATE OF THE ART

The multiple access systems employed in both fixed access (for example that termed wireless local loop, or WLL), and in those that involve mobility (for example digital cellular systems), consist of a series of fixed units, each one of which covers a zone or cell, in which the power radiated by them is detected. This detection is performed by a set of remote units located within the cell.

In the WLL systems the remote units are fixed and their presence is configured by the system administrator, whilst in cellular systems the remote units are free to visit each cell.

In both cases, the problem arises of how to share the radio resources for operating the service among the different simultaneous communications (multiple access). The multiple access digital systems are based on:
- Time Division (TDM/TDMA): Each frequency of those intended to receive the result of modulating the bits produced in the encoding of the various communications divides its transmission time into various intervals or time slots. The various possible time slots forming a chain constitute a frame. There is an uplink frame (from remote unit to fixed unit) and a downlink frame in the opposite direction. The two can be separated from each other by using different frequencies (for example, like the method known as FDD), or else through establishing working sub-slots of the frequency, one for transmitting the downlink frame and another for receiving the uplink frame (for example like the TDD or ping-pong method).
- Code Division (CDMA): Each communication is distinguished from the rest by the use of a code, made up of a pseudorandom sequence of bits, which multiplies the bits that encode each communication before being applied to the modulator. This multiplication produces the spreading of the spectrum of the signal and the lowering of the amplitude, being so mixed in the air with the rest of the communications likewise processed. In reception, the reverse process is adopted to obtain the signal, multiplying the global signal mixture of all the communications by the same code employed in the transmission: the orthogonality or pseudo-orthogonality (low correlation) of the codes guarantees the recovery of the signal provided that it is detected with a minimum signal-to-noise ratio.

Both methods can be mixed in the TDM/CDMA or TDD/CDMA systems, in which in the time slots in which each modulator is operating use is made of the CDMA codes to distinguish the different communications.

In the CDMA systems, various methods are employed for acquiring synchronisation. One of them consists in transmitting a specific pilot channel, which uses a public PN code known to all the stations.

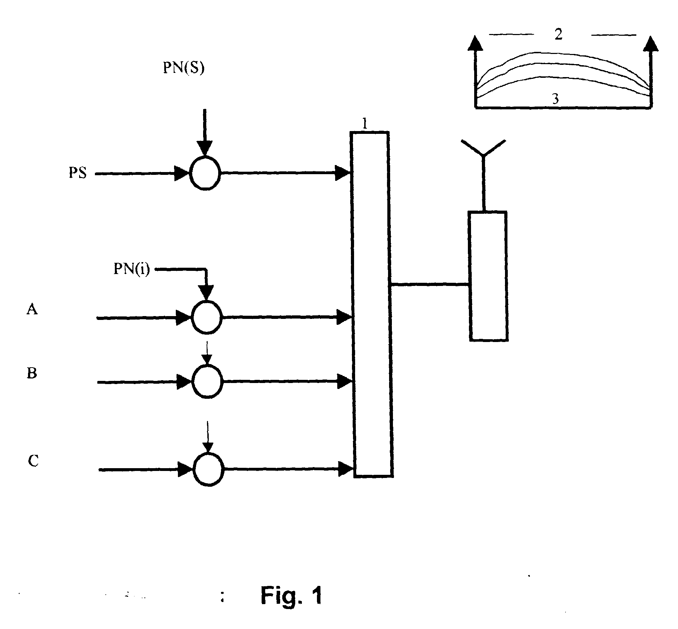

Figure 1 shows a schematic diagram of a CDMA system according to said solution known in the sate of the art. In said figure it is shown how the synchronisation code (PS) is spread over the spectrum through multiplication by the code PN(S), and applied to the modulator (1), in parallel with the rest of the traffic signals (A, B, C ...), spread by using their respective CDMA PN(i) codes. The traffic signals act like noise in the detection process of the synchronisation signal, making it more difficult.

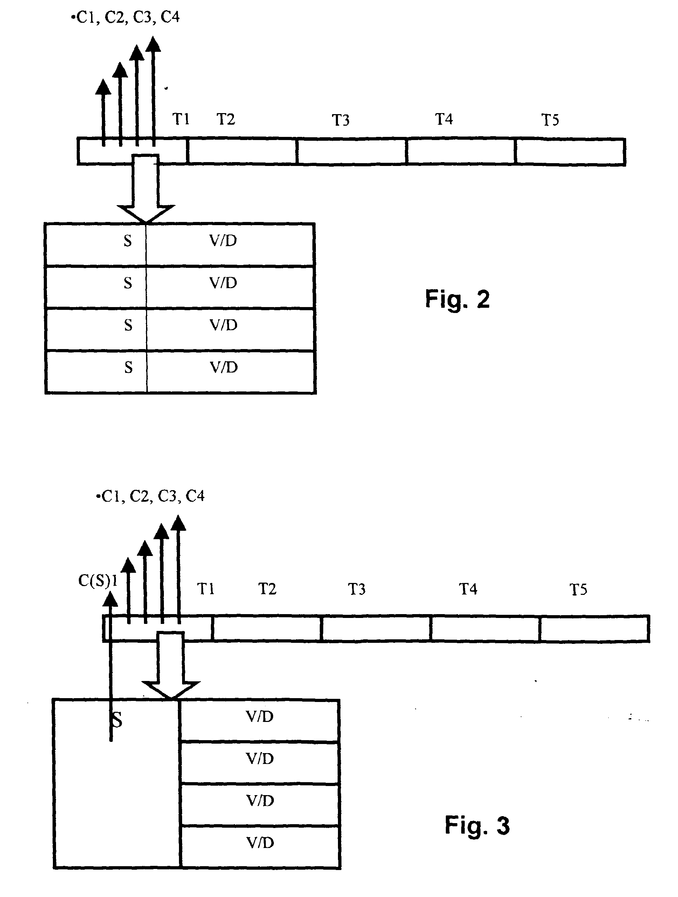

A second solution known consists in separating the time slot into two sub-fields, one of them with a synchronisation pattern and the second carrying signalling and/or data or speech samples. In figure 2 different synchronous CDMA channels are shown in a single time slot, the synchronisation sub-fields (S) of which are submitted to spreading via the codes per channel C1, C2, C3, C4.

Again, each receiver, when trying to identify the synchronisation field of the channel, shall receive as noise the energy spread over the spectrum of the rest of the synchronisation fields of the remaining channels, making locking-on difficult.

Consequently it is still necessary to substantially reduce the noise in a synchronisation process.

### DESCRIPTION OF THE INVENTION

To resolve the problems outlined above, the invention proposes the transmission of a single synchronisation field, spread using the same code, and common to all CDMA channels transmitted in the same time slot, instead of a different one for each CDMA channel of the same time slot. This concept is applicable in the downlink frame, in which each fixed unit transmits synchronously all the CDMA channels, and is of special application in TDD/CDMA systems, though it is also applicable in FDD/CDMA systems.

Furthermore, the invention permits the identification of the TDM time slot, if different codes are employed for synchronisation in each time slot, which facilitates frame synchronisation acquisition. The invention therefore offers the following benefits:
1 - Simplifies the locking-on process of the remote units, since the synchronisation field is not transmitted together with other information that is interpreted as interference. This field, which employs a common code, would not necessarily need to be transmitted with the same power as the information field.
2 - Permits the identification of frame/multiframe synchronism through the difference in the CDMA spreading code of the synchronisation pattern, which is made dependent on the time slot within the frame.

In the uplink frame, on the other hand, the field is not common to all the CDMA channels, but to a group thereof. Said group includes the channels originating in a same termination. The remaining procedures are similar to the case of the downlink frame.

Thus an object of the invention is to provide a method of synchronisation in a CDMA (code division multiple access) system that is characterised by the division of an information transmission time slot into at least two sub-fields, a first synchronisation sub-field and a second information sub-field, such that in said synchronisation sub-field a pattern is transmitted spread over a spectrum through the use of a code common to a predetermined number of CDMA channels that are transmitted in a synchronous manner.

According to one aspect of the invention, in the downlink direction, from the fixed unit to the remote units, in the synchronisation sub-field said spread pattern is common to all CDMA channels that are 'transmitted synchronously.

According to another aspect of the invention, in the uplink direction from the remote unit to the fixed unit, in the synchronisation sub-field said pattern is common to a group of CDMA channels originating in a same remote unit.

According to a further aspect of the invention the code common to a predetermined number of CDMA channels is indicative of the start of a multiframe.

According to yet another further aspect, the method of the invention permits a power level in the synchronisation sub-field different to that of the information sub-field and not subject to automatic power control.

Another object of the present invention is to facilitate a transmitter unit for carrying out the method of the present invention.

### BRIEF DESCRIPTION OF THE DRAWINGS

Figure 1 shows a schematic diagram of a CDMA system according to a solution known in the state of the art.

Figure 2 shows a schematic diagram of a CDMA system according to a second solution known in the state of the art.

Figure 3 shows a CDMA frame employing common synchronisation for all channels according to the present invention.

Figure 4 shows a block diagram of a CDMA system according to the present invention.

### PRACTICAL EMBODIMENT

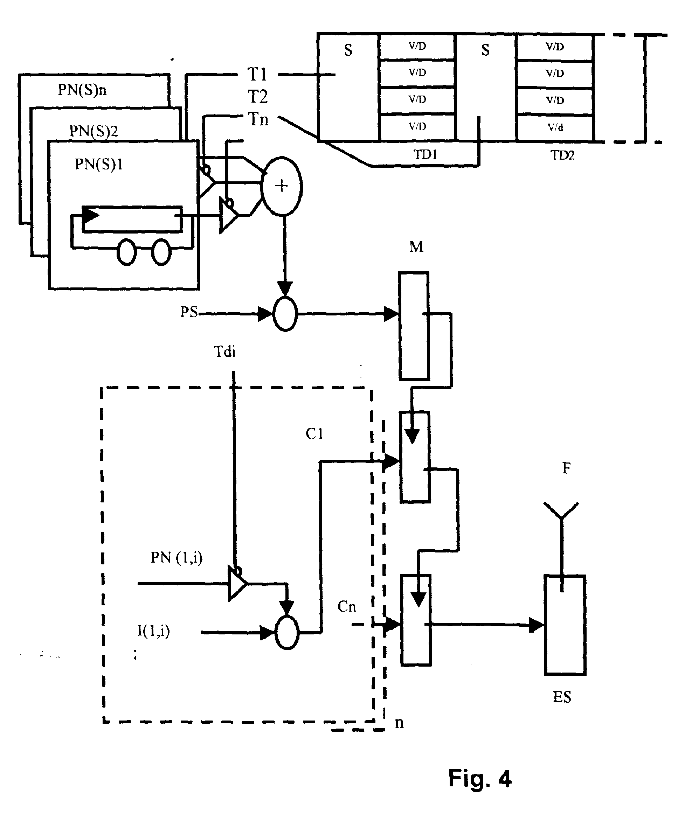

Consider a fixed unit, which transmits a TDM frame of m time slots on the frequency F, such as can be seen in figure 4. Each time slot is employed as time for sending simultaneously the outcome of the multiplication of various channel and speech encoding products by different CDMA codes (PN(1,i), PN(2,i),...PN(n,i) for time slot i). The number n of CDMA codes that distinguish simultaneous communications depends on the bandwidth at F and on the bit rate of the channel to be transmitted (as an example, 64 kb/s for a PCM channel and 32 kb/s for an ADPCM channel).

In figure 3 is shown how a single synchronisation pattern S is spread using a common code C(S)1, C(S)2, ...C(S)i in each time slot (C(S)1, code of time slot 1; C(S)2, code of time slot 2; ... C(S)i, code of time slot i). The pattern, after its detection, permits the acquisition of bit, channel, frame and multiframe synchronisation. This pattern is applied to the radiofrequency output stage, after passing through a modulation unit (M in Fig. 4) in which CDMA spreading has taken place by using a characteristic code in each time slot (PN(S)1, PN(S)2 ... PN(S)n in Fig. 4). After the time has elapsed for the k bits that comprises the header, the digital output streams are applied to the modulation units (the same in number as there are simultaneous CDMA channels per time slot), said streams carrying the voice or data communications to be transmitted in the time slot (C1 ... Cn in Fig. 4). This second information sub-field is spread over the spectrum by making use of different codes in each CDMA channel. Each information sub-field is subject to automatic gain control, in contrast to the synchronisation sub-field, which is transmitted at a constant level (Fig. 4).

In the uplink frame, on the other hand, the sub-field is not common to all CDMA channels, but to a group thereof. Said group includes the channels originating in a same termination. The remaining procedures are similar to the case of the downlink frame.

It is to be noted that the synchronisation sub-field S can be at the start, at the end or at any intermediate point of the pertinent time slot without this altering the main concepts of the present invention.

## Claims

1. **Method for synchronisation in a CDMA (code division multiple access) system**, said system comprising at least a fixed unit and a plurality of remote units that communicate with said at least one fixed unit by means of a radio signal, simultaneous communications being permitted with the use of CDMA codes; **characterised** in that an information transmission time slot (T1, ..., T5) is divided into at least two sub-fields, a first synchronisation sub-field (S) and a second information sub-field (V/D), such that in said synchronisation sub-field (S) a pattern is transmitted spread over a spectrum through the use of a code (PN) common to a predetermined number of CDMA channels that are transmitted synchronously.

2. **Method for synchronisation in a CDMA (code division multiple access) system** according to claim 1, **characterised** in that said common code (PN) that affects the synchronisation sub-field (S) is different in each time slot.

3. **Method for synchronisation in a CDMA (code division multiple access) system** according to claim 1, **characterised** in that said common code (PN) that affects the synchronisation sub-field (S) is common in one same time slot.

4. **Method for synchronisation in a CDMA (code division multiple access) system** according to any of claims 1 to 3, **characterised** in that in the downlink direction from the fixed unit to the remote units, in the synchronisation sub-field (S) said spread pattern is common to all CDMA channels that are transmitted synchronously.

5. **Method for synchronisation in a CDMA (code division multiple access) system** according to any of claims 1 to 3, **characterised** in that in the uplink direction from the remote unit to the fixed unit, in the synchronisation sub-field (S) said pattern is common to a group of CDMA channels originating in a same remote unit.

6. **Method for synchronisation in a CDMA (code division multiple access) system** according to any of claims 1 to 5, **characterised** in that the code common to a predetermined number of CDMA channels is indicative of the start of a multiframe.

7. **Method of transmitting the synchronisation information** according to claim 1, with a power level different to that of the information sub-field and not subject to automatic power control.

8. **Fixed transmitter unit** for carrying out the method of claim 1.

9. **Remote transmitter unit** for carrying out the method of claim 1.
